# EUROPEAN PATENT SPECIFICATION

(11) **EP 4 464 902 B1**
(45) Date of publication and mention of the grant of the patent: **08.07.2026**
(21) Application number: 24176005.7
(22) Date of filing: 15.05.2024
(51) Int. Cl.: F16B 2/12, F16B 5/06, B21J 13/02, F16B 3/06, F16B 43/00

(54) **CAM-ACTUATABLE CLAMP AND RELATED COMPONENTS**
NOCKENBETÄTIGBARE KLEMME UND ZUGEHÖRIGE KOMPONENTEN
PINCE ACTIONNABLE PAR CAME ET COMPOSANTS ASSOCIÉS

(30) Priority: 18.05.2023 US 202363467489 P
(43) Date of publication of application: 20.11.2024
(73) Proprietor: Dadco, Inc., Plymouth, MI 48170 (US)
(72) Inventor: COTTER, Jonathan P., Dearborn, 48124 (US)
(74) Representative: Blumbach · Zinngrebe Patentanwälte PartG mbB

(56) References cited:
- US-A1- 2012 151 985
- US-A1- 2022 106 987

## Description

This application claims the priority of U.S. Provisional Application No. 63/467,489 filed May 18, 2023.

### TECHNICAL FIELD

This disclosure relates generally to fastening devices, more particularly, to a clamp actuatable by a cam.

### BACKGROUND

Fasteners, such as nuts and bolts, are ubiquitous in industry. Some fasteners are adapted for use with mounts for securing round body cylinders in a prepared pocket. For instance, stamping and molding tools commonly include cylindrical products (e.g., gas springs) for shifting components of the stamping or molding tools relative to the tools. In at least some instances, the cylindrical products are arranged in and secured to the stamping or molding tool so as to be able to withstand vibrations, impulse shocks, or other undesirable motion associated with manufacturing. Prior applications have used custom fitting techniques that require time consuming, and excessively precise machining, which increases the overall cost and complexity.

US 2012151985 A1, for example, discloses a gas spring mount and related method for metal forming dies includes a one-piece, split clamping ring having a generally ovate plan shape with two spaced apart axes of symmetry. A generally circular clamping portion extends around the first axis, and is shaped to receive a gas spring body therein. A hook-shaped end extends around the second axis and is shaped to receive a tapered head mounting member therein. A resilient free end is located operably between the clamping portion and the hook-shaped end portion, whereby tightening of the mounting member shifts the hook-shaped end outwardly and the free end inwardly to constrictingly pull the clamping ring securely against the gas spring body and contemporaneously attach the assembly to an associated die member.

US 2022/0106987 A1 discloses an axle receiving arrangement for an air vent rotary drive.

### BRIEF SUMMARY

An illustrative embodiment of a clamp assembly includes a mount ring, wherein the mount ring includes an ovate outer perimeter, a top surface, a bottom surface, and a first portion including a first passage established by a first radially inwardly facing surface at a first radius from a first longitudinal axis extending through the first passage, a second portion including a second passage established by a second radially inwardly facing surface at a second radius from a second longitudinal axis extending through the second passage and spaced transversely away from the first longitudinal axis of the first portion, and a mount ring countersink in the top surface and coaxial with the second passage, and a third portion including a third passage established by laterally inwardly facing walls and extending along a transverse axis between the first longitudinal axis and the second longitudinal axis. The clamp assembly also includes a clamp movably carried in the third passage of the third portion of the mount ring, movable along the transverse axis between an unclamped position relatively toward the second portion and a clamped position relatively toward the first portion, and including a radially inwardly facing clamp surface corresponding to the first radially inwardly facing surface and a cam countersink corresponding to the mount ring countersink, and a cam engageable with the clamp to move the clamp along the third passage toward the first portion of the mount ring.

An illustrative embodiment of clamp assembly includes a mount ring, wherein the mount ring includes an outer perimeter, a first passage extending along a first longitudinal axis, a second passage extending along a second longitudinal axis spaced transversely apart from the first passage, and a third passage extending along a transverse axis between the first and second longitudinal axes. The clamp assembly also includes a clamp configured to be movable with respect to the mount ring along the third passage of the mount ring, and a cam configured to engage with and actuate the clamp along the third passage.

An illustrative embodiment of clamp assembly includes a mount ring, wherein the mount ring includes an ovate outer perimeter, a top surface, a bottom surface, a first portion including a first passage established by a first radially inwardly facing surface at a first radius from a first longitudinal axis extending through the first passage, and having one or more first portion reliefs in the first radially inwardly facing surface and spaced circumferentially around the first radially inwardly facing surface, a second portion including a second passage established by a second radially inwardly facing surface at a second radius from a second longitudinal axis extending through the second passage and spaced transversely away from the first longitudinal axis of the first portion, and having a mount ring countersink in the top surface and coaxial with the second passage, and also having one or more second portion reliefs spaced circumferentially on either side of the mount ring countersink, and a third portion including a third passage established by laterally inwardly facing walls and extending along a transverse axis between the first longitudinal axis and the second longitudinal axis and including a clamp track established by laterally inwardly facing walls, and including protrusions extending laterally inwardly from the laterally inwardly facing walls. The clamp assembly also includes a clamp carried by the clamp track of the third portion of the mount ring, movable along the transverse axis between an unclamped position relatively toward the second portion and a clamped position relatively toward the first portion, and including a radially inwardly facing clamp surface corresponding to the first radially inwardly facing surface and a cam countersink corresponding to the mount ring countersink, a cam to actuate the clamp, and including a conical washer including a central aperture, a conical profile including a diameter that is greater than a distance between the mount ring countersink and the cam countersink when the clamp is in the unclamped position, and an upper surface, and a socket head cap fastener including a head to operatively engage the upper surface of the conical washer, and a shank extending away from the head and through the central aperture of the conical washer.

An illustrative embodiment of a mount ring includes an ovate outer perimeter, a top surface, a bottom surface, a circular portion including a first passage established by a first radially inwardly facing surface at a first radius from a first longitudinal axis extending through the first passage, an arcuate portion including a second passage established by a second radially inwardly facing surface at a second radius from a second longitudinal axis extending through the second passage and also including a mount ring countersink in the top surface and coaxial with the second passage, and a straight portion including a third passage established by laterally inwardly facing walls extending along a transverse axis between the first longitudinal axis and the second longitudinal axis.

An illustrative embodiment of a clamp assembly includes a mount ring, which includes an outer perimeter, a first passage extending along a first longitudinal axis, a second passage extending along a second longitudinal axis spaced transversely apart from the first longitudinal passage, and a third passage extending along a transverse axis between the first and second longitudinal axes. The clamp assembly also includes a clamp movable with respect to the mount ring along a cam track of the third passage of the mount ring, and a protrusion intersecting the third passage along the cam track to retain the clamp in the third passage of the mount ring.

The subject-matter of the invention is set out in the independent claims 1, 12 and 14.

### BRIEF DESCRIPTION OF THE DRAWINGS

FIG. 1 is a perspective view according to an illustrative embodiment of a clamp assembly as applied to a metal forming die including a gas spring;
FIG. 2 is a side view of the metal forming die having the clamp assembly of FIG. 1;
FIG. 3 is an exploded perspective view of the clamp assembly of FIGS. 1 and 2, including a mount ring, a clamp, and a cam;
FIG. 4 is a top view of the mount ring of FIG. 3;
FIG. 5 is a bottom view of the mount ring of FIG. 3;
FIG. 6A is an enlarged cross-sectional view of the mount ring of FIG. 5;
FIG. 6B is a cross-sectional view of another embodiment of a mount ring;
FIG. 6C is a cross-sectional view of another embodiment of a mount ring;
FIG. 6D is a cross-sectional view of another embodiment of a mount ring;
FIG. 6E is a cross-sectional view of another embodiment of a mount ring;
FIG. 7 is a top view of the clamp of FIG. 3;
FIG. 8 is a bottom view of the clamp of FIG. 3;
FIG. 9 is a front view of the clamp of FIG. 3;
FIG. 10 is a side view of the cam of FIG. 3;
FIG. 11 is a side view of another embodiment of a cam;
FIG. 12 is a perspective view of the clamp assembly of FIG. 3 in a clamped position;
FIG. 13 is a top view of the clamp assembly of FIG. 3 in an unclamped position;
FIG. 14 is a top view of the clamp assembly of FIG. 12;
FIG. 15 is a cross-sectional view of the clamp assembly of FIG. 12;
FIG. 16 is a top view according to another illustrative embodiment of a clamp assembly;
FIG. 17 is a cross-sectional view of the clamp assembly of FIG. 16 along line 17-17; and
FIG. 18 is a cross-sectional view of the clamp assembly of FIG. 16 along line 18-18.
FIG. 19 is a top view according to one embodiment of a clamp retained in the clamp assembly in an unclamped position.
FIG. 20 is an enlarged fragmentary view of a portion of the clamp assembly of FIG. 19 taken from Circle 20.
FIG. 21 is an enlarged fragmentary perspective view of another portion of the clamp assembly of FIG. 19 taken from Circle 21.
FIG. 22 is an enlarged, fragmentary cross-sectional view of a portion of the clamp assembly of FIG. 19 taken along line 22-22.
FIG. 23 is a top view according to another embodiment of a clamp retained in a clamp assembly in an unclamped position.
FIG. 24 is a perspective view of the mount ring of FIG. 23.
FIG. 25 is an enlarged fragmentary view of a portion of the clamp assembly depicted in FIG. 23 taken from Circle 23.
FIG. 26 is a top view of the clamp assembly at a maximum extended position.
FIG. 27 is a top view of the clamp assembly showing the clamp being assembled to the mount ring.

### DETAILED DESCRIPTION

In general, a clamp assembly will be described using one or more examples of illustrative embodiments of a gas spring mount for a metal forming die. The example embodiments will be described with reference to use in the metal forming industry. However, it will be appreciated as the description proceeds that the claimed subject matter is useful in many different applications and may be implemented in many other embodiments.

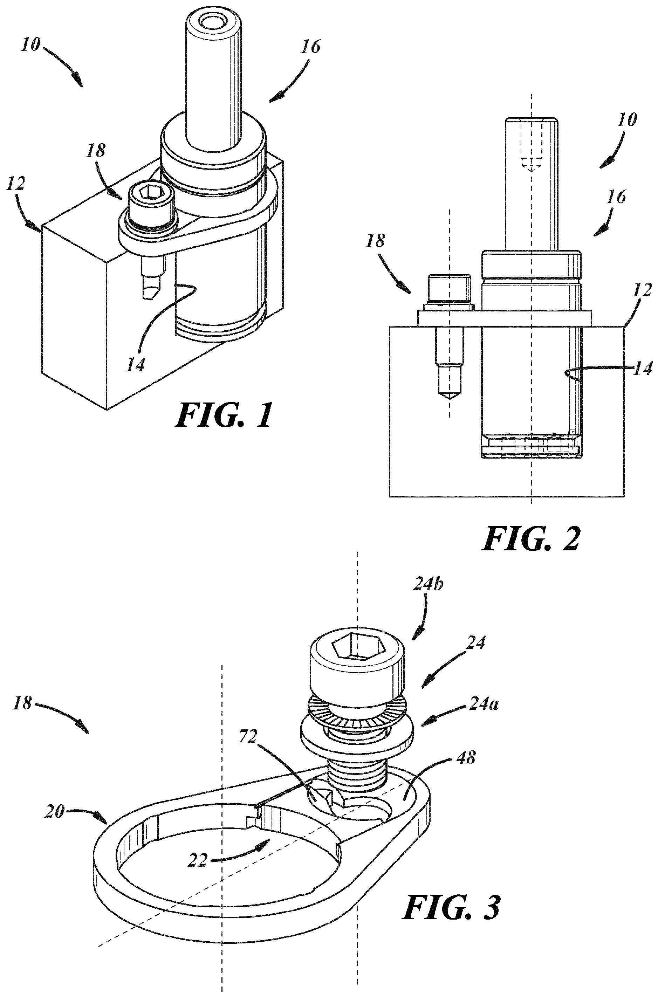

Referring specifically to the drawings, FIGS. 1 and 2 show an illustrative embodiment of a metal forming die assembly 10 including a portion of a die member 12 having a pocket 14, a gas spring 16 disposed in the pocket, and a clamp assembly 18 retaining the gas spring to the die member. As will be described in more detail below, the clamp assembly includes a novel arrangement of features that may provide improved functionality compared to prior clamps.

With reference to FIG. 3, the clamp assembly includes a mount ring 20 arranged about a first longitudinal axis and a second longitudinal axis, a clamp 22 configured to be movable with respect to the mount ring, and a cam 24 configured to engage with and actuate the clamp. As will be described in greater detail below, the clamp assembly may be configured to cooperate with both of the clamp and the mount ring to move the clamp relative to the mount ring to provide a substantially uniform force on a cylinder positioned within the clamp assembly.

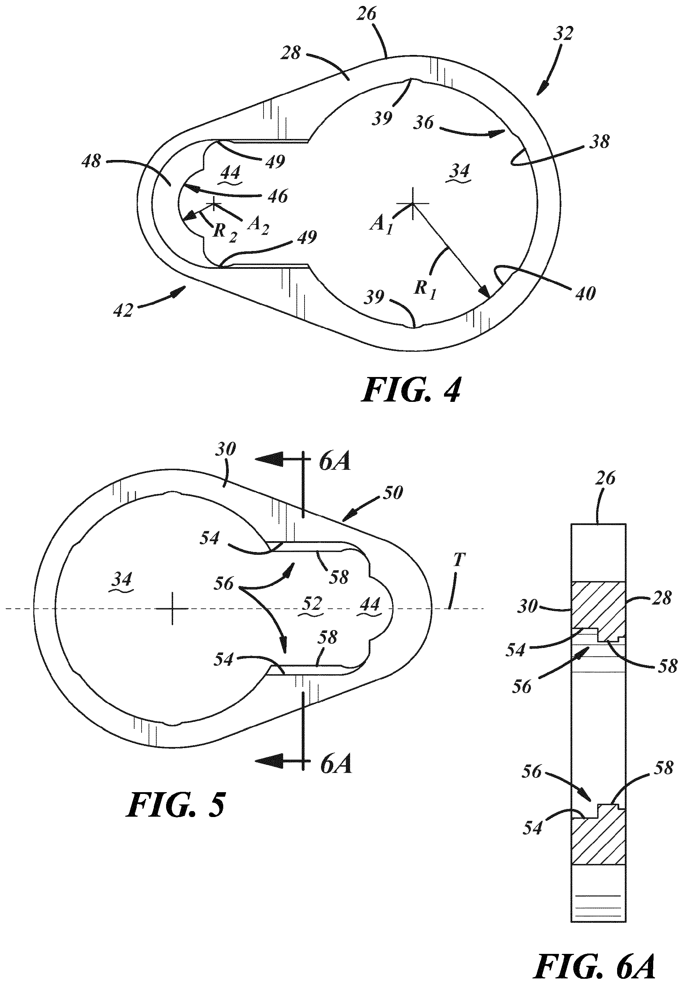

With reference to FIGS. 4, 5, and 6, the mount ring includes an outer perimeter 26, a top surface 28, and a bottom surface 30 (FIG. 5). In the present illustrative embodiment, the outer perimeter has a generally ovate shape and is circumferentially continuous, e.g., having no circumferential interruptions. An ovate outer perimeter may be desirable to reduce cost (i.e., requires less material), however, the outer perimeter can be a non-ovate shape too. The mount ring comprises a thickness extending between the top surface and the bottom surface.

With reference to FIG. 4, the mount ring or clamp housing includes a first or circular portion 32 including a first passage 34 that may be established by a first radially inwardly facing surface 36 at a first radius R1 from the first longitudinal axis extending through the first passage. As shown in FIGS. 1 and 2, the first portion may be arranged for a cylinder such as a gas spring. The first radially inwardly facing surface may include at least one first portion relief 38 and at least one clamping section spaced circumferentially from the first portion relief. The at least one first relief portion may vary in size, such that one of the reliefs 39 may define a greater portion of the circumference of the first radially inwardly facing surface than another relief. In any case, relief from a simple circular shape may be desirable to help compensate for any manufacturing variations and also may help concentrate the load on, for example, 40-60% of the circumference of the first radially inwardly facing surface. Also, the at least one first portion relief may be desirable so that the first portion is elastically deformable. As such, the first portion can flex or temporarily deform at the at least one first portion relief so that the at least one clamping section can exert a substantially uniform and inward force on the cylinder during assembly. Too much relief, however, may result in undesired yielding and/or deflection. On the other hand, if the mount ring does not include enough relief, then manufacturing imperfections may prevent or reduce clamping effectiveness. The inward force provided from the at least one clamping section may be substantially perpendicular to the first longitudinal axis. It may be desirable to clamp on three points of a cylinder to avoid excessive concentrated force and/or avoid product damage. Assemblies that rely on two point or four point clamping may provide unstable clamping and/or may result in unwanted loosening.

With continued reference to FIG. 4, the mount ring further includes a second or arcuate portion 42 including a second passage 44 that may be established by a second radially inwardly facing surface 46 at a second radius R2 from the second longitudinal axis extending through the second passage and spaced transversely away from the first longitudinal axis of the first portion. The second portion may further include a mount ring countersink 48 in the top surface and coaxial with the second passage. One or more second portion reliefs 49 may be spaced circumferentially on either side of the second radially inwardly facing surface and may be desirable for facilitating uninterrupted movement of the clamp with respect to the mount ring.

As shown in FIG. 5, a third or straight portion 50 including a third passage 52 may be established by laterally inwardly facing walls 54 extending along a transverse axis between the first longitudinal axis and the second longitudinal axis. With reference to FIG. 6A, the third passage may further include a clamp track 56 established by protrusions 58 that extend inwardly from the laterally inward facing walls and are parallel to the transverse axis T. As shown in FIG. 6A, the protrusions may include an inset or channel that corresponds with at least a portion of the clamp (discussed in more detail below).

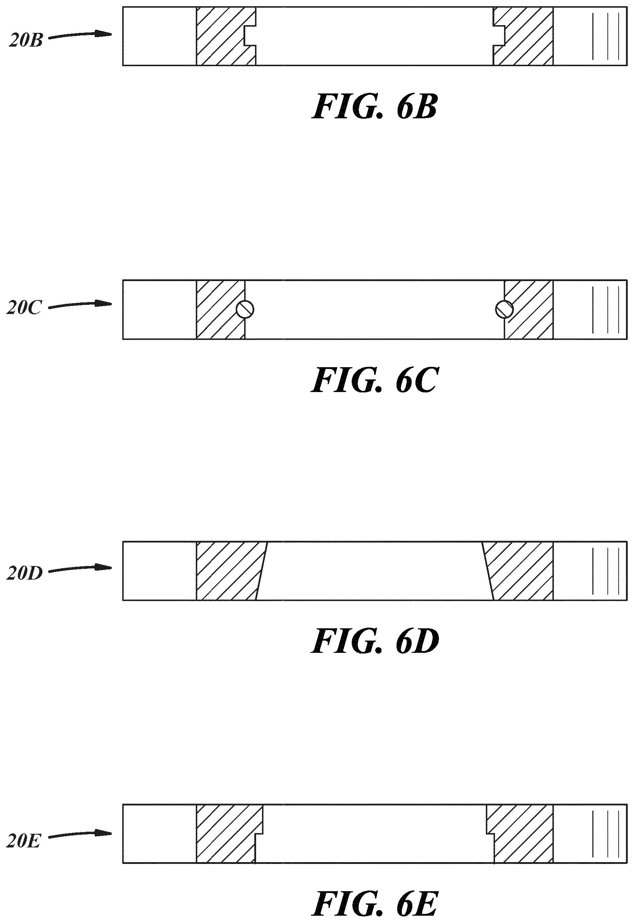

FIGS. 6B-6E show additional embodiments of mount rings having other possible arrangements of clamp tracks for supporting and/or guiding a clamp along the transverse axis during operation and/or during assembly. For instance, in FIG. 6B, laterally inwardly facing walls of mount ring 20B include straight gibs that form grooves for receiving at least a portion of the clamp. In FIG. 6C, laterally inwardly facing walls of mount ring 20C include round grooves that are configured to receive a floating pin which is arranged between the mount ring and at least a portion of the clamp. In FIG. 6D, laterally inwardly facing walls of mount ring 20D are inwardly angled walls that correspond with a least a portion of the clamp (e.g., a dovetail shaped clamp). In FIG. 6E, laterally inwardly facing walls of mount ring 20E include a step extending inwardly form the laterally inward facing walls for axially supporting at least a portion of the clamp.

The mount rings 20-20E may be of any suitable construction and composition. For instance, the mount rings 20-20E may be manufactured using a laser, water jet, profile cut, blanked, molded, cast, or with any other suitable process. In at least one embodiment, the mount rings are profile blanked and then machined using a computer numerical control (CNC) machine. The mount rings may be manufactured from one or more materials, such as steel, aluminum, stainless steel, nickel-based alloys, nylon, or another suitable material. Note, however, the material of the mount rings are generally selected to substantially match the strength of the material of the item being clamped (e.g., cylinder body of a gas spring).

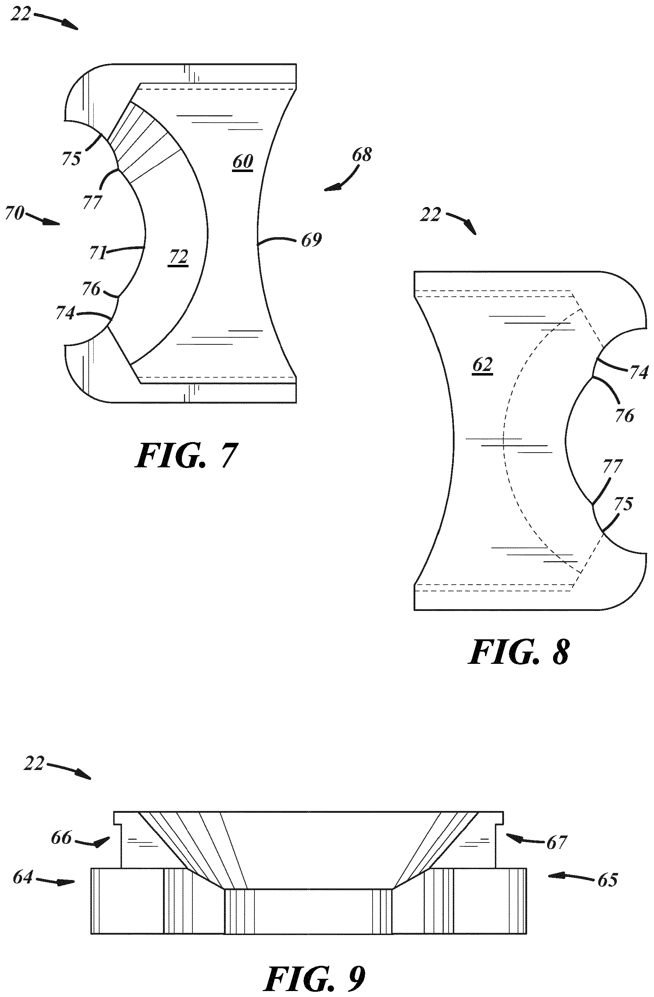

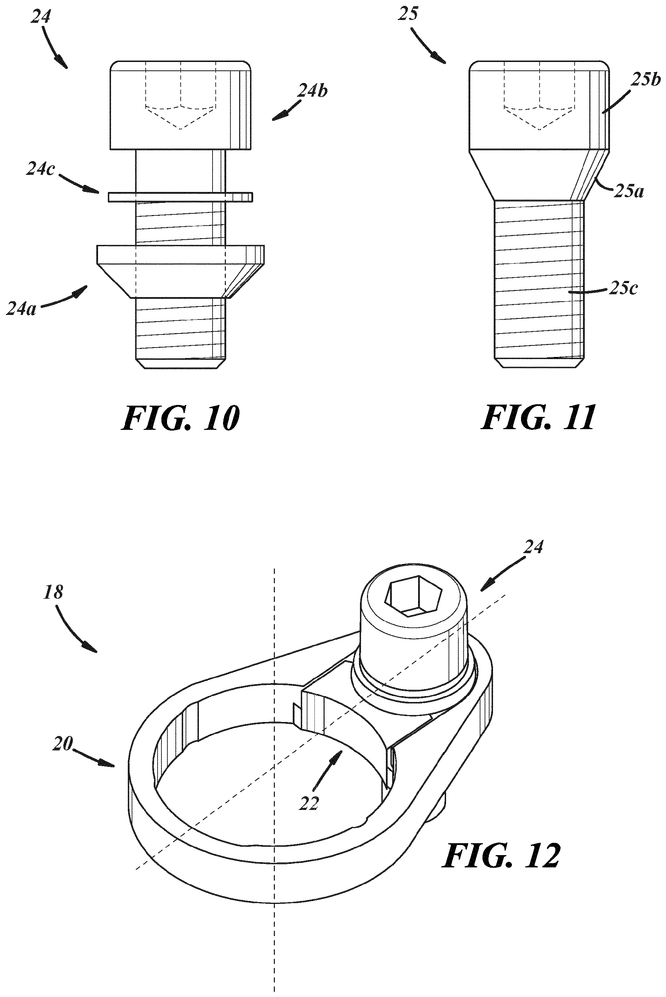

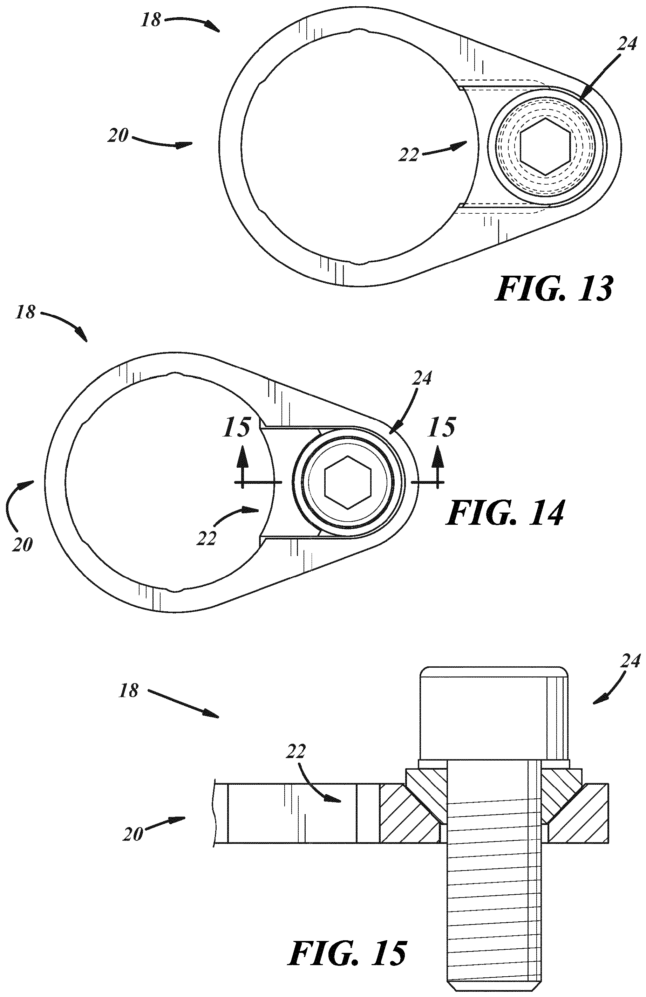

With reference again to FIG. 3, the clamp (i.e., clamp shoe or cam follower) is illustrated so as to be carried within the third portion of the mount ring and is movable along the transverse axis between an unclamped position (FIG. 13) relatively toward the second portion and a clamped position (see FIGS. 12 and 14) relatively toward the first portion. The clamp comprises an upper surface 60 (FIGS. 7 and 9), a lower surface 62 (FIGS. 8 and 9), and a thickness between the upper and lower surfaces. As best shown in FIG. 9, the clamp includes a first laterally outer side 64 extending between the upper and lower surfaces and having a first track element 66. The clamp also includes a second laterally outer side 65 extending between the upper and lower surfaces and having a second track element 67. The first and second track elements of the first and second laterally outer sides may be further defined by grooves or slots which correspond to the protrusions of the third portion of the mount ring.

As shown in FIGS. 6B-6E, the first and second track elements of the clamp may be configured to correspond with different arrangements of the mount ring so that clamp can move with respect to the mount ring and transfer fastening load on a cylinder. For instance, in FIG. 6B, the first and second track elements include teeth that correspond to the grooves on the mount ring. In FIG. 6C, the track elements are round grooves which are configured to receive and travel along the floating pin. In FIG. 6D, the first and second track elements are angled walls that collectively form a dovetail shape and correspond with the angled walls of the mount ring. In FIG. 6E, the first and second track elements are steps that extend outwardly from the clamp and correspond with the steps on the mount ring. Note, these abovementioned illustrative embodiments are just a few possible arrangements of the first and second track elements and other arrangements for guiding the clamp and transferring fastening load during assembly are possible.

With reference to FIG. 7, the clamp further comprises a radially inner end 68, which, with reference to FIG. 3, is configured to be disposed at a first radius from the first longitudinal axis and a radially outer end 70 at a second radius from the second longitudinal axis. The radially inner end may be further defined by a radially inwardly facing surface 69 which corresponds with the first radially inwardly facing surface of the first portion. The radially outward end includes a radially outwardly facing surface 71 which corresponds to the second radially inwardly facing surface 72 of the second portion. The clamp may further comprise a clamp countersink in the upper surface that extends between the upper surface and the radially outer end.

As best shown in FIG. 3, the clamp countersink corresponds with the mount ring countersink on the first portion of the mount ring. In FIGS. 7 and 8, the radially outward end may further include one or more clamp reliefs 74, 75(e.g., scallops) spaced circumferentially from the radially outwardly facing surface and extending circumferentially between the radially outwardly facing surface and a portion of either the first or second laterally outer sides of the clamp. As best shown in FIGS. 3 and 7, the at least one clamp relief and one of the laterally outer sides of the clamp may form a point or apex 76, 77 configured so as to correspond with the at least one second portion relief of the mount ring. In the present illustrative embodiment, there is an apex on the first lateral side and another apex on the second lateral side, such that when the apexes of the clamp are positioned within the at least one second portion relief of the mount ring, the clamp countersink and the mount ring countersink are at a minimum distance from each other and form a cam seat for the cam.

The clamp may be of any suitable construction and composition. For instance, the clamp may be manufactured using a laser, water jet, profile cut, blanked, molded, or cast, or with any other suitable process. In at least one embodiment, the clamp is profile blanked and then machined using a computer numerical control (CNC) machine. The clamp may be manufactured from one or more materials, such as steel, aluminum, stainless steel, nickel-based alloys, nylon, or another suitable material. Note, however, the material of the clamp is generally selected to substantially match the strength of the material of the item being clamped (e.g., cylinder body of a gas spring).

With continued reference to FIG. 3, the cam is shown engageable with the clamp to move the clamp transversely along the third passage toward the first portion of the mount ring. The cam can be a conical washer 24a and a fastener 24b, or a fastener 24b with a conical shoulder 25a, or any other component suitable for actuating a clamp (e.g., linearly or rotationally). For instance, in FIG. 10, the cam is shown including the conical washer 24a including a central aperture, a cylindrical portion, a cam upper surface, and a conical profile (e.g., tapered exterior) configured to engage with the surfaces of the mount ring countersink and the clamp countersink. The conical profile of the conical washer may include a diameter which is greater than the minimum distance between the mount ring countersink and the clamp countersink when the clamp is in the unclamped position (FIGS. 3 and 13).

The conical profile may form a variety of angles with the cylindrical portion for transferring force to and moving the clamp during assembly. Acute angles between the conical profile and the cylindrical portion may result in more clamping leverage and thus, better locking of the cam, but this arrangement typically requires greater overall travel for the cam. When angles between the conical profile and cylindrical portion are greater than 45 degrees, for example, the amount of force generated by the cam may be less but overall travel of the cam may be reduced. In the present illustrative embodiment, the angle between the conical profile and the cylindrical portion is 45 degrees and this angle provides about a 1:1 transmission of torque.

The cam further comprises the fastener 24b, such as a socket head fastener, which may include a head and a shank extending away from the head. External hexagon fasteners, lobe drive fasteners, or any other suitable fastener rated to supply sufficient clamp load may also be used. As shown in FIG. 10, the shank may extend through the central aperture so that the head may operatively engage the cam upper surface. In at least one embodiment, the cam may further include a spring washer 24c comprising a central aperture that is disposed between the conical washer and the head of the fastener so as to increase the surface area for the head of the fastener to fasten (i.e., clamp) on during assembly. The spring washer may be a compressible serrated washer, which may be desirable because fastener friction increases quickly during fastening and this may help prevent loosening.

The conical washer may be of any suitable construction and composition. For instance, the conical washer may be manufactured from one or more materials, such as steel, aluminum, stainless steel, nickel-based alloys, nylon, or another suitable material. Note, however, the material of the conical washer is generally selected so as to have a hardness between the hardness of the fastener and the hardness of the mount. In other words, in at least one embodiment, the conical washer will have a hardness between 15 Rc and 45 Rc on the Rockwell scale.

With reference to FIG. 11, another illustrative embodiment of a cam is shown comprising a fastener 25 having a head 25b including the conical shoulder 25a and a shank 25c extending from the head and configured to engage with the surfaces of the mount ring countersink and the clamp countersink. The conical shoulder may include a diameter that is greater than the minimum distance between the mount ring countersink and the clamp countersink when the clamp is in the unclamped position (FIGS. 3 and 13) so the cam can be fastened to transversely move the clamp.

With reference to FIG. 15, the clamp and the mount ring may be configured such that the contact between the conical profile of the cam and the clamp and the mount ring occurs at one area on the mount ring and one area on the clamp so that the clamp can move from the unclamped position to the clamped position. In the present illustrative embodiment, the cam is configured to contact an area on the clamp countersink and an area on the mount ring countersink during assembly. The clamp countersink and the mount ring countersink may also be configured (e.g., sized) to limit the amount of movement of the clamp along the third portion of the mount ring. For instance, the clamp countersink and the mount ring countersink may comprise a certain diameter compared to the minimum distance between the countersinks so that the clamp moves less than 1mm when the cam is driven by the fastener to its clamping position. In any case, and as shown in FIG. 14, when the cam is driven to its clamping position by the fastener at its rated or full torque, the clamp is locked in a position along the transverse axis such that the clamp exhibits a proportional clamping load on a cylinder. In the present embodiment, the clamp assembly is configured such that clamping load is substantially equal at a contact point between the radially inwardly facing surface of the clamp and the cylinder and at least one additional contact point between the one or more clamping sections of the mount ring and the cylinder. The clamping load may help determine the axial holding load given a coefficient of friction (e.g., steel-steel: .15-.60) between the cylinder and the mount ring clamping surfaces, for example. Due to variation in surfaces or as a result of coatings or films from lubrication or other liquids associated with manufacturing that accumulate on clamping surfaces, it may be desirable to concentrate the clamping load through the mount ring reliefs to help compensate for any such variations.

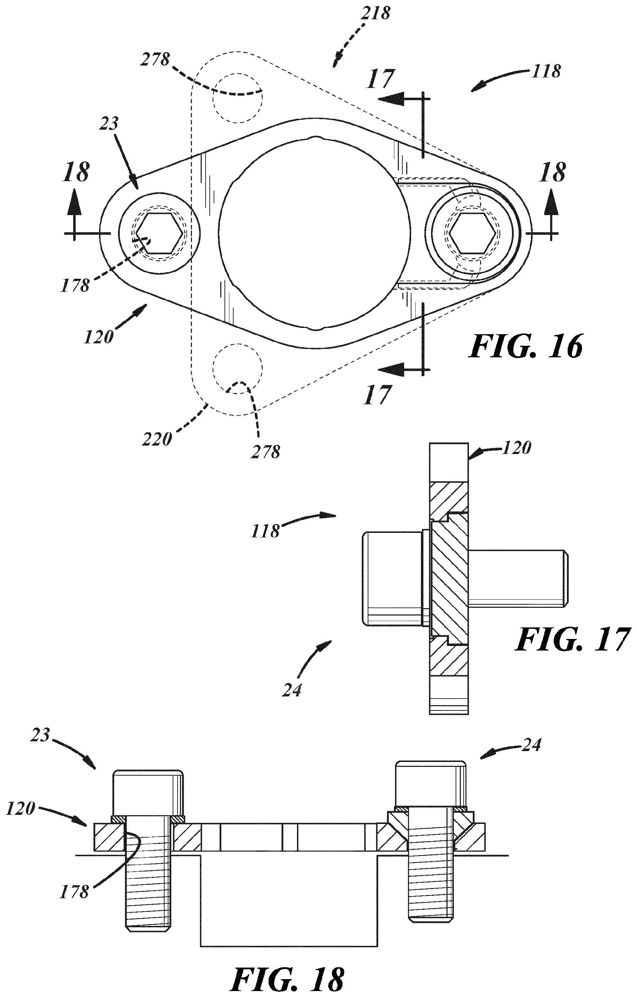

FIGS. 16-18 illustrate an additional illustrative embodiment of a clamp assembly 118 adapted for use with one or more additional fasteners. This embodiment is similar in many respects to the embodiment of FIGS. 1-15 and like numerals between embodiments generally designate like or corresponding elements. Accordingly, the descriptions of the embodiments are hereby incorporated into one another, and description of subject matter common to the embodiments may not be repeated.

In FIG. 16, a mount rings is illustrated and configured to accommodate one or more additional fasteners 23. For instance, mount ring' 120 includes one additional through hole 78 and mount ring" 220 (shown in dotted broken lines) includes two additional through holes 278. The additional through holes and fasteners may be desirable to provide additional support for the clamp assembly. During assembly, as introduced above, the clamp may be actuated and secured to a round body cylinder by fastening the cam to its rated or full torque. Subsequently, as shown in FIGS. 17 and 18, the additional fastener may be inserted through the through hole of mount ring' 120 and fastened or otherwise clamped to its rated or full torque. The number of though holes and fasteners provided beyond that described in the first illustrative embodiment should not be construed or otherwise limited to the amount shown in the present illustrative embodiment, as this illustrative embodiment is just one example.

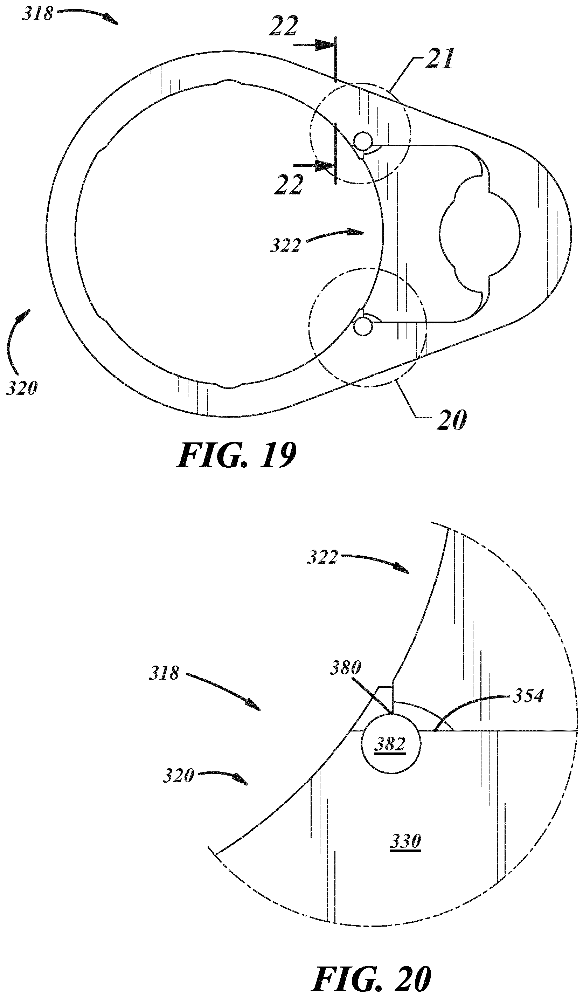

FIGS. 19-27 illustrate additional illustrative embodiments of a clamp assembly 318, 418 adapted for use with one or more additional fasteners. These embodiments are similar in many respects to the embodiments of FIGS. 1-18 and like numerals between embodiments generally designate like or corresponding elements. Accordingly, the descriptions of the embodiments are hereby incorporated into one another, and description of subject matter common to the embodiments may not be repeated.

From FIGS. 19-27, the present disclosure also provides a clamp assembly 318 with a retention function. The clamp assembly 318 includes a mount ring 320, a clamp 322 and a protrusion 380. The mount ring 320 includes an outer perimeter, a first passage, a second passage and a third passage. The first passage may be established by a first radially inwardly facing surface at a first radius from the first longitudinal axis extending through the first passage. The second passage may be established by a second radially inwardly facing surface at a second radius from the second longitudinal axis extending through the second passage and spaced transversely away from the first longitudinal axis. The third passage may be established by laterally inwardly facing walls extending along a transverse axis between the first longitudinal axis and the second longitudinal axis. The clamp 322 may be movable with respect to the mount ring 320 along a cam track of the third passable of the mount ring 320. The clamp assembly further includes a protrusion 380 that works in conjunction with the clamp 322 to enable retaining the clamp 322 within the third passage of the mount ring 320 and prevent free removal during assembly, packaging or transportation.

In FIGS. 19-20, a clamp 322 is retained in the clamp assembly 318 in an unclamped position. The protrusion 380, which intersects the third passage along the cam track, and engages laterally surface of the clamp 354 for contacting the clamp 322 in the third passage of the mount ring 320. The protrusion 380 is desirable for securing the clamp 322 and preventing its movement along the cam track in the third passage of the mount ring 320. When a cam is driven to its clamping position by engaging a fastener at its rated or full torque, the protrusion 380 allows the clamp 322 to move fully from the third passage of the mount ring 320 to a clamped position relatively toward a first portion of the mount ring. The protrusion 380 is desirable for retaining the clamp 322 in the unclamped position. Once the clamp 322 has fully moved from the third passage to the clamping position, the protrusion 380 prevents the clamp 322 from moving beyond the clamped position.

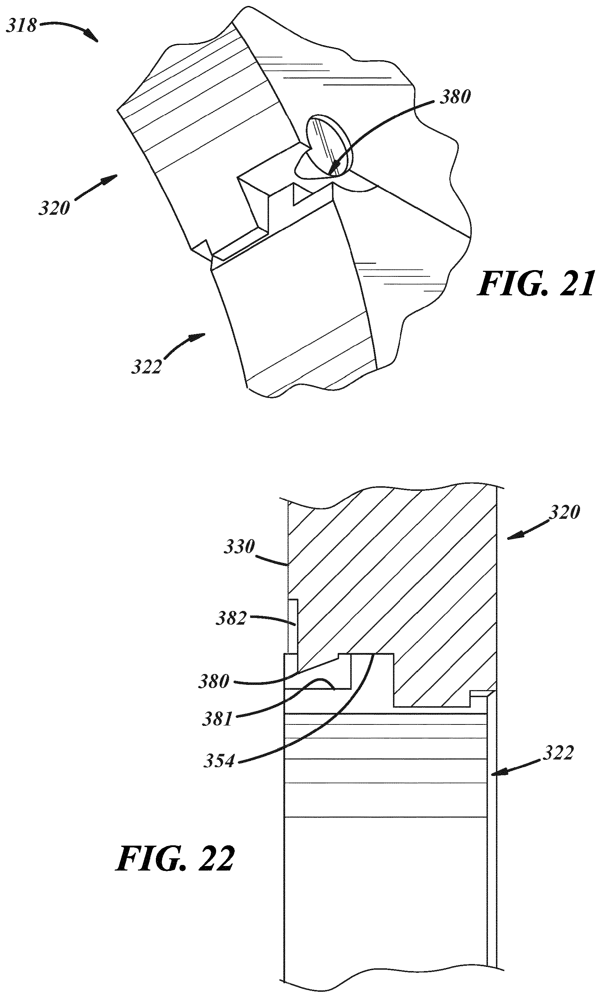

In FIG. 21, the protrusion 380 is formed after the cam is installed and may be formed by displacing small amount of material at the mount ring through processes such as dimpling, riveting or peening. In FIG. 22, the protrusion may be configured to engage with any laterally surface of the clamp for contacting the clamp in the third passage of the mount ring.

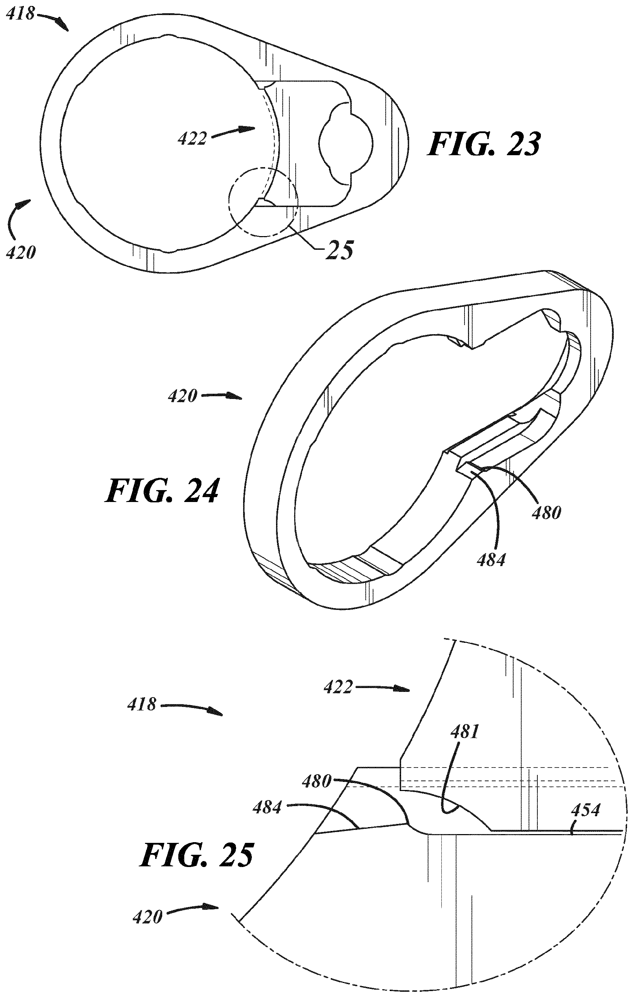

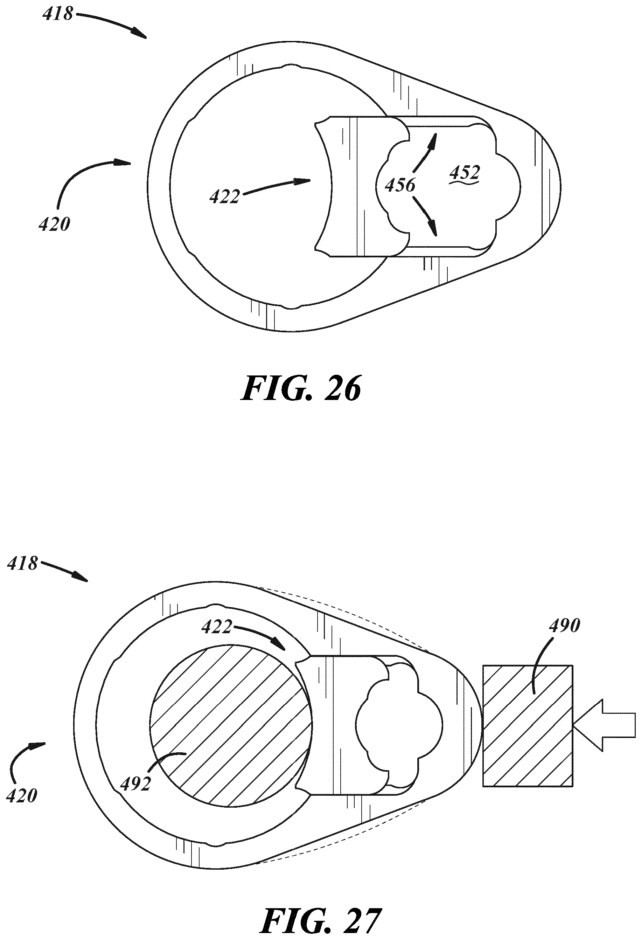

FIGS. 23-27 illustrate another illustrative embodiment of a clamp assembly 418 with a retention function. The clamp assembly 418 includes a mount ring 420, a clamp 422 and a protrusion 480 as same as the above embodiment, except the protrusion 480 which has a lead-in ramp 484 with a ramp angle of less than 10 degrees to retain the clamp 422 within the third passage. The protrusion 480 engages laterally surface of the clamp 454 for retaining the clamp in the third passage of the mount ring 420. In FIG. 23, a clamp 422 is retained in the clamp assembly 418 in an unclamped position. The protrusion 480, which intersects a third passage 452 along a cam track 456, is desirable for securing the clamp 422 and preventing its movement along the cam track 456 in the third passage 452 of the mount ring 420. A clamp side may be designed to match the ramp angle, enabling it to engage with a clamp groove. This configuration ensures the clamp 422 remains securely positioned within the third passage of the mount ring 420. When a cam is driven to its clamping position by engaging a fastener at its rated or full torque, the protrusion 480 allows the clamp 422 to move fully from the third passage 452 of the mount ring 420 to a clamped position relatively toward a first portion of the mount ring 420. As showed in FIG. 26, the clamp 422 is at a maximum extended position. The protrusion 480 is desirable for retaining the clamp 422 in the unclamped position. Once the clamp 422 has fully moved from the third passage 452 to the clamping position, the protrusion 480 prevents the clamp 422 from moving beyond the clamped position.

The protrusion 480 is pre-formed before assembly of the clamp to the mount ring 420. In FIG. 27, the section of mount ring 420 responding to the third passage is thin. Thus, forcing the slide 490 with fixed backing 492 into the ring will cause the outer mount ring to flex within its elastic yield limits, which may spring open to allow assembling the clamp 422, followed by snapping back into a free fit slide area. The mount ring 420 is compressible along the transverse axis to widen the third passage and the cam track, allowing the insertion of the clamp 422 past the protrusion 480 and into the third passage. In FIG. 24, the protrusion 480 may be configured to engage with any laterally surface of the clamp for contacting the clamp in the third passage of the mount ring.

Summarizing, the clamp assembly includes a mount ring with a first portion including a first passage extending along a first longitudinal axis, a second portion including extending along a second longitudinal axis spaced transversely apart from the first longitudinal passage, and third portion including a third passage extending along a transverse axis between the first and second longitudinal axes, and a clamp movably carried in the third passage of the third portion of the mount ring, and a cam engageable with the clamp to move the clamp toward the first portion of the mount ring. Also disclosed are related clamps and mount rings.

Features of the mount ring and/or of the clamp that are described or claimed in connection with the clamp assembly shall also be deemed to be disclosed for the mount ring and/or the clamp and vice versa.

As used in herein, the terminology "for example," "e.g.," for instance," "like," "such as," "comprising," "having," "including," and the like, when used with a listing of one or more elements, is to be construed as open-ended, meaning that the listing does not exclude additional elements. As used herein, permissive terms like "may" and "can" are expedients merely to indicate optionality, for instance, of a disclosed embodiment, element, feature, or the like, and should not be construed as rendering indefinite any disclosure herein. Moreover, directional words such as front, rear, top, bottom, upper, lower, radial, circumferential, axial, lateral, longitudinal, vertical, horizontal, transverse, and/or the like are employed by way of example and not necessarily limitation.

Finally, the subject matter of this application is presently disclosed in conjunction with several explicit illustrative embodiments and modifications to those embodiments, using various terms. All terms used herein are intended to be merely descriptive, rather than necessarily limiting, and are to be interpreted and construed in accordance with their ordinary and customary meaning in the art, unless used in a context that requires a different interpretation. And for the sake of expedience, each explicit illustrative embodiment and modification is hereby incorporated by reference into one or more of the other explicit illustrative embodiments and modifications. As such, many other embodiments and modifications either exist now or are yet to be discovered and, thus, it is neither intended nor possible to presently describe all such subject matter, which will readily be suggested to persons of ordinary skill in the art in view of the present disclosure. Rather, the present disclosure is intended to embrace all such embodiments and modifications of the subject matter of this application as fall within the broad scope of the accompanying claims.

## Claims

1. A clamp assembly (18, 118, 318, 418), , comprising: a mount ring (20, 120, 220, 320, 420) including
an outer perimeter,
a first passage (34) extending along a first longitudinal axis,
a second passage (44) extending along a second longitudinal axis spaced transversely apart from the first passage (34), and
a third passage (52) extending along a transverse axis between the first and second longitudinal axes;
a clamp (22) configured to be movable with respect to the mount ring along the third passage (52) of the mount ring (20, 120, 220, 320, 420); and
a cam (24) configured to engage with and actuate the clamp (22) along the third passage (52).

2. The clamp assembly (18, 118, 318, 418) of claim 1, wherein the outer perimeter of the mount ring (20, 120, 220, 320, 420) is ovate and circumferentially continuous.

3. The clamp assembly (18, 118, 318, 418) of one of the preceding claims, wherein the first passage (34) includes a first passage radius (R1) and the second passage (44) includes a second passage radius (R2), the first passage radius (R1) being greater than the second passage radius (R2).

4. The clamp assembly (18, 118, 318, 418) of one of the preceding claims, wherein the third passage (52) includes a clamp track (56) that is parallel to the transverse axis and includes two laterally facing surfaces which support and guide the clamp (22) along the transverse axis.

5. The clamp assembly (18, 118, 318, 418) of one of the preceding claims, wherein the cam (24) includes a conical washer (24a, 24b) having a central passage and a fastener including a shank (25c) extending through the central passage and a head (25b) to operatively engage the cam (24) and/or wherein the cam (24) includes a conical profile such that contact between the conical profile and the mount ring (20, 120, 220, 320, 420) and the clamp (22) moves the clamp (22) along the transverse axis.

6. The clamp assembly (318), according to claim 4, wherein a mount ring also includes:
an ovate outer perimeter,
a top surface,
a bottom surface,
a first portion including the first passage (34) established by a first radially inwardly facing surface at a first radius from a first longitudinal axis extending through the first passage, and having one or more first portion reliefs in the first radially inwardly facing surface and spaced circumferentially around the first radially inwardly facing surface,
a second portion including the second passage (44) established by a second radially inwardly facing surface at a second radius from a second longitudinal axis extending through the second passage and spaced transversely away from the first longitudinal axis of the first portion, and having a mount ring countersink in the top surface and coaxial with the second passage, and also having one or more second portion reliefs spaced circumferentially on either side of the mount ring countersink, and
a third portion including the third passage (52) established by laterally inwardly facing walls and extending along a transverse axis between the first longitudinal axis and the second longitudinal axis and including a clamp track (56) established by laterally inwardly facing walls, and including protrusions (380) extending laterally inwardly from the laterally inwardly facing walls;
the clamp (322) carried by the clamp track (56) of the third portion of the mount ring (320), movable along the transverse axis between an unclamped position relatively toward the second portion and a clamped position relatively toward the first portion, and including a radially inwardly facing clamp surface corresponding to the first radially inwardly facing surface and a cam countersink corresponding to the mount ring countersink;
the cam to actuate the clamp, and including
a conical washer (24a, 24b) including a central aperture, a conical profile including a diameter that is greater than a distance between the mount ring countersink (48) and the cam countersink when the clamp is in the unclamped position, and an upper surface; and
a socket head cap fastener including a head to operatively engage the upper surface of the conical washer (24a, 24b), and a shank (25c) extending away from the head and through the central aperture of the conical washer (24a, 24b).

7. The clamp assembly (418), according to claim 4, wherein
the clamp (422) is movable with respect to the mount ring (420) along a cam track of the third passage of the mount ring; and
the mount ring (420) includes a protrusion (480) intersecting the third passage (452) along the cam track (456) to retain the clamp (422) in the third passage (452) of the mount ring (420).

8. The clamp assembly (418) according to claim 7, wherein one, a plurality of, or all of the following features apply:
wherein the protrusion (480) is formed after the clamp (422) is installed;
wherein the protrusion (480) is formed by displacing material of the mount ring (420) by dimpling, riveting or peening;
wherein the protrusion (480) engages a lateral surface of the clamp (422) contacting the third passage (452) of the mount ring (420);
wherein the protrusion (480) prevents the clamp (422) from moving beyond a clamped position;
wherein the protrusion (480) has a lead-in ramp with a shallow angle of less than 10 degrees;
wherein the protrusion (480) is pre-formed before assembly of the clamp (422) to the mount ring (420), and the mount ring (420) is compressible along the transverse axis to cause the third passage (452) and the cam track (456) to widen to allow insertion of the clamp (422) past the protrusion (480) and into the third passage (452); and/or
wherein the lead-in ramp is positioned on a lateral surface of the third passage (452) of the mount ring (420) to engage the clamp (422).

9. The clamp assembly (18, 118, 318, 418), according to claim 4 wherein:
the mount ring (20, 120, 220, 320, 420) also includes:
a top surface (28),
a bottom surface (30), and
a first portion (32) including the first passage (34) established by a first radially inwardly facing surface (36) at a first radius (R1) from the first longitudinal axis extending through the first passage (34),
a second portion (42) including
the second passage (44) established by a second radially inwardly facing surface (46) at a second radius (R2) from the second longitudinal axis extending through the second passage (44) and spaced transversely away from the first longitudinal axis of the first portion (32), and
a mount ring countersink (48) in the top surface (28) and coaxial with the second passage (44), and
a third portion (50) including the third passage (52) established by laterally inwardly facing walls (54) and extending along the transverse axis between the first longitudinal axis and the second longitudinal axis;
the clamp (22) being movably carried in the third passage (52) of the third portion (50) of the mount ring (20), movable along the transverse axis between an unclamped position relatively toward the second portion (42) and a clamped position relatively toward the first portion (32), and including a radially inwardly facing clamp surface corresponding to the first radially inwardly facing surface (36) and a cam countersink corresponding to the mount ring countersink (48); and
the cam (24) being engageable with the clamp (22) to move the clamp (22) along the third passage (52) toward the first portion (32) of the mount ring (20).

10. The clamp assembly (18) of claim 9, wherein the cam (24) includes a conical washer (24a) including a central aperture, a conical profile having a diameter that is greater than a distance between the mount ring countersink (48) and the cam countersink when the clamp (22) is in the unclamped position, and a cam upper surface, and a fastener (24b) including a head to operatively engage the cam upper surface and a shank extending away from the head and through the central aperture of the cam (24), preferably wherein the clamp (22) and the mount ring (20) are configured such that contact between the conical profile of the cam (24) and the clamp (22) and the mount ring (20) occurs at one area on the mount ring (20) and one area on the clamp (22) so that the clamp (22) can move from the unclamped position to the clamped position.

11. The clamp assembly (18) of one of the preceding claims, wherein the first portion (32) is elastically deformable and includes at least one first portion relief (38) and at least one clamping section spaced circumferential from the at least one first portion relief, and wherein the at least one clamping section and the clamp (22) are configured to exert substantially uniform tension around a cylinder when the clamp (22) is in the clamped position, and/or wherein the second portion (42) includes at least one second portion relief (49) spaced circumferentially on either side of the second radially inwardly facing surface (46).

12. A mount ring (20, 120, 220, 320, 420), comprising:
an outer perimeter (26);
a top surface (28);
a bottom surface (30);
a circular portion (32) including a first passage (34) established by a first radially inwardly facing surface (36) at a first radius (R1) from a first longitudinal axis extending through the first passage (34);
an arcuate portion (42) including a second passage (44) established by a second radially inwardly facing surface (46) at a second radius (R2) from a second longitudinal axis extending through the second passage (44) **characterised by** the arcuate portion (42) also including a mount ring countersink (48) in the top surface and coaxial with the second passage (44); and by
a straight portion (50) including a third passage (52) established by laterally inwardly facing walls (54) extending along a transverse axis between the first longitudinal axis and the second longitudinal axis.

13. The mount ring (20, 120, 220, 320, 420) of claim 12, wherein one, a plurality of, or all of the following features apply:
wherein the outer perimeter (26) is circumferentially continuous;
wherein the circular portion (32) includes relief sections (38, 39) and contact sections circumferentially spaced about the first radially inwardly facing surface;
wherein the arcuate portion (42) includes at least one relief section (49) spaced circumferential on either side of the second passage (44); and/or
wherein the first radius (R1) is greater than the second radius (R2).

14. A clamp (22), comprising:
a radially inner end (68) at a first radius from a first longitudinal axis;
a radially outer end (70) at a second radius from a second longitudinal axis;
an upper surface;
a lower surface; **characterised by**
a first laterally outer side extending between the upper and lower surfaces and having a first track element;
a second laterally outer side extending between the upper and lower surfaces and having a second track element; and
a countersink in the upper surface and extending between the upper surface and the radially outer end.

15. The clamp (22) of claim 14, wherein the first and second track elements (66, 67) of the first and second laterally outer sides include grooves/slots, and/or further including one or more reliefs spaced circumferentially on either side of the radially outer end.

16. The clamp assembly (18, 118, 318, 418) of claim 1, wherein the cam (24), in order to engage with and actuate the clamp (22), moves along the second longitudinal axis.

## Patentansprüche

1. Klemmbaugruppe (18, 118, 318, 418), umfassend:
einen Befestigungsring (20, 120, 220, 320, 420) mit
einem Außenumfang,
einer ersten Durchgangsöffnung (34), die sich entlang einer ersten Längsachse erstreckt,
einer zweiten Durchgangsöffnung (44), die sich entlang einer zweiten Längsachse erstreckt, die in Querrichtung von der ersten Durchgangsöffnung (34) beabstandet ist, und
einer dritten Durchgangsöffnung (52), die sich entlang einer Querachse zwischen der ersten und der zweiten Längsachse erstreckt,
eine Klemme (22), die dazu ausgebildet ist, relativ zu dem Befestigungsring entlang der dritten Durchgangsöffnung (52) des Befestigungsrings (20, 120, 220, 320, 420) bewegbar zu sein, und
einen Nocken (24), der dazu ausgebildet ist, an der Klemme (22) in Anlage zu kommen und diese entlang der dritten Durchgangsöffnung (52) zu betätigen.

2. Klemmbaugruppe (18, 118, 318, 418) nach Anspruch 1, wobei der Außenumfang des Befestigungsrings (20, 120, 220, 320, 420) oval und in Umfangsrichtung durchgehend ausgebildet ist.

3. Klemmbaugruppe (18, 118, 318, 418) nach einem der vorhergehenden Ansprüche, wobei die erste Durchgangsöffnung (34) einen ersten Öffnungsradius (R1) aufweist und die zweite Durchgangsöffnung (44) einen zweiten Öffnungsradius (R2) aufweist, wobei der erste Öffnungsradius (R1) größer ist als der zweite Öffnungsradius (R2).

4. Klemmbaugruppe (18, 118, 318, 418) nach einem der vorhergehenden Ansprüche, wobei die dritte Durchgangsöffnung (52) eine Klemmenführung (56) aufweist, die parallel zu der Querachse verläuft und zwei seitlich gerichtete Flächen umfasst, welche die Klemme (22) entlang der Querachse stützen und führen.

5. Klemmbaugruppe (18, 118, 318, 418) nach einem der vorhergehenden Ansprüche, wobei der Nocken (24) eine konische Scheibe (24a, 24b) mit einer mittigen Durchgangsöffnung umfasst, sowie ein Befestigungselement, das einen sich durch die mittige Durchgangsöffnung erstreckenden Schaft (25c) aufweist, sowie einen Kopf (25b) , um funktionswirksam an dem Nocken (24) in Anlage zu kommen, und/oder wobei der Nocken (24) ein konisches Profil aufweist, so dass bei Kontakt zwischen dem konischen Profil und dem Befestigungsring (20, 120, 220, 320, 420) sowie der Klemme (22) die Klemme (22) entlang der Querachse bewegt wird.

6. Klemmbaugruppe (318) nach Anspruch 4,
wobei ein Befestigungsring außerdem umfasst:
einen ovalen Außenumfang,
eine Oberseite,
eine Unterseite,
einen ersten Bereich mit der ersten Durchgangsöffnung (34), die durch eine erste radial nach innen gerichtete Oberfläche gebildet ist, in einem ersten Radius von einer ersten Längsachse, die sich durch die erste Durchgangsöffnung erstreckt, und mit einer oder mehreren Ausnehmungen des ersten Bereichs in der ersten radial nach innen gerichteten Oberfläche, die in Umfangsrichtung beabstandet um die erste radial nach innen gerichtete Oberfläche angeordnet sind,
einen zweiten Bereich mit der zweiten Durchgangsöffnung (44), die durch eine zweite radial nach innen gerichtete Oberfläche gebildet ist, in einem zweiten Radius von einer zweiten Längsachse, die sich durch die zweite Durchgangsöffnung erstreckt und in Querrichtung von der ersten Längsachse des ersten Bereichs beabstandet ist, und mit einer Senkung des Befestigungsrings in der Oberseite und koaxial zu der zweiten Durchgangsöffnung, und außerdem mit einer oder mehreren Ausnehmungen des zweiten Bereichs, die in Umfangsrichtung beabstandet auf beiden Seiten der Senkung des Befestigungsrings angeordnet sind, und
einen dritten Bereich mit der dritten Durchgangsöffnung (52), die durch seitlich nach innen gerichtete Wandungen gebildet ist und sich entlang einer Querachse zwischen der ersten Längsachse und der zweiten Längsachse erstreckt und eine Klemmenführung (56) umfasst, die durch seitlich nach innen gerichtete Wandungen gebildet ist, und mit Vorsprüngen (380), die sich von den seitlich nach innen gerichteten Wandungen aus seitlich nach innen erstrecken,
wobei die Klemme (322) von der Klemmenführung (56) des dritten Bereichs des Befestigungsrings (320) getragen wird, wobei sie bewegbar ist entlang der Querachse zwischen einer nicht klemmenden Stellung relativ in Richtung des zweiten Bereichs und einer klemmenden Stellung relativ in Richtung des ersten Bereich, und wobei sie eine radial nach innen gerichtete Klemmfläche aufweist, die der ersten radial nach innen gerichteten Oberfläche entspricht, sowie eine Nockensenkung, die der Senkung des Befestigungsrings entspricht,
wobei der Nocken zum Betätigen der Klemme ausgebildet ist und umfasst
eine konische Scheibe (24a, 24b) mit einer mittigen Öffnung, einem konischen Profil mit einem Durchmesser, der größer ist als ein Abstand zwischen der Senkung des Befestigungsrings (48) und der Nockensenkung, wenn sich die Klemme in der nicht klemmenden Stellung befindet, und mit einer Oberseite, und
ein Steckschlüsselkopf-Befestigungselement mit einem Kopf zum funktionswirksamen In-Anlage-Kommen an der Oberseite der konischen Scheibe (24a, 24b), und mit einem Schaft (25c), der sich von dem Kopf hinweg und durch die mittige Öffnung der konischen Scheibe (24a, 24b) hindurch erstreckt.

7. Klemmbaugruppe (418) nach Anspruch 4, wobei
die Klemme (422) in Bezug auf den Befestigungsring (420) entlang einer Nockenführung der dritten Durchgangsöffnung des Befestigungsrings bewegbar ist, und
der Befestigungsring (420) einen Vorsprung (480) aufweist, der die dritte Durchgangsöffnung (452) entlang der Nockenführung (456) kreuzt, um die Klemme (422) in der dritten Durchgangsöffnung (452) des Befestigungsrings (420) zu halten.

8. Klemmbaugruppe (418) nach Anspruch 7, wobei eines, mehrere oder sämtliche der folgenden Merkmale zutreffen:
der Vorsprung (480) wird nach dem Einbau der Klemme (422) ausgebildet,
der Vorsprung (480) wird ausgebildet durch Verdrängen von Material des Befestigungsrings (420) durch Eindellen, Nieten oder Stauchen,
der Vorsprung (480) kommt in Anlage an einer seitlichen Fläche der Klemme (422), welche mit der dritten Durchgangsöffnung (452) des Befestigungsrings (420) in Kontakt steht,
der Vorsprung (480) verhindert, dass die Klemme (422) über eine klemmende Stellung hinaus bewegt wird,
der Vorsprung (480) weist eine Einlaufschräge mit einem flachen Winkel von weniger als 10 Grad auf,
der Vorsprung (480) wird vor dem Zusammenbau der Klemme (422) mit dem Befestigungsring (420) vorgeformt, und der Befestigungsring (420) ist entlang der Querachse zusammendrückbar, so dass die dritte Durchgangsöffnung (452) und die Nockenführung (456) geweitet wird, um das Einfügen der Klemme (422) an dem Vorsprung (480) vorbei und in die dritte Durchgangsöffnung (452) zu ermöglichen, und/oder
die Einlaufschräge befindet sich an einer seitlichen Fläche der dritten Durchgangsöffnung (452) des Befestigungsrings (420), um an der Klemme (422) in Anlage zu kommen.

9. Klemmbaugruppe (18, 118, 318, 418) nach Anspruch 4, wobei:
der Befestigungsring (20, 120, 220, 320, 420) außerdem umfasst:
eine Oberseite (28),
eine Unterseite (30) und
einen ersten Bereich (32) mit der ersten Durchgangsöffnung (34), die durch eine erste radial nach innen gerichtete Fläche (36) in einem ersten Radius (R1) von der ersten, sich durch die erste Durchgangsöffnung (34) erstreckenden Längsachse gebildet ist,
einen zweiten Bereich (42) mit
der zweiten Durchgangsöffnung (44), die durch eine zweite radial nach innen gerichtete Fläche (46) in einem zweiten Radius (R2) von der zweiten Längsachse gebildet ist, die sich durch die zweite Durchgangsöffnung (44) erstreckt und in Querrichtung von der ersten Längsachse des ersten Bereichs (32) beabstandet ist, und
einer Senkung (48) des Befestigungsrings in der Oberseite (28) und koaxial zu der zweiten Durchgangsöffnung (44), und
einen dritten Bereich (50) mit der dritten Durchgangsöffnung (52), die durch seitlich nach innen gerichtete Wandungen (54) gebildet ist und sich entlang der Querachse zwischen der ersten Längsachse und der zweiten Längsachse erstreckt,
wobei die Klemme (22) beweglich in der dritten Durchgangsöffnung (52) des dritten Bereichs (50) des Befestigungsrings (20) gehalten ist, wobei sie entlang der Querachse bewegbar ist zwischen einer nicht klemmenden Stellung relativ in Richtung des zweiten Bereichs (42) und einer klemmenden Stellung relativ in Richtung des ersten Bereichs (32), und wobei sie eine radial nach innen gerichtete Klemmfläche aufweist, die der ersten radial nach innen gerichteten Fläche (36) entspricht, sowie eine Nocken-Senkung, die der Senkung (48) des Befestigungsrings entspricht, und
wobei der Nocken (24) an der Klemme (22) in Anlage bringbar ist, um die Klemme (22) entlang der dritten Durchgangsöffnung (52) in Richtung des ersten Bereichs (32) des Befestigungsrings (20) zu bewegen.

10. Klemmbaugruppe (18) nach Anspruch 9, wobei der Nocken (24) eine konische Scheibe (24a) umfasst, mit einer mittigen Öffnung, einem konischen Profil mit einem Durchmesser, der größer ist als ein Abstand zwischen der Senkung des Befestigungsrings (48) und der Nockensenkung, wenn sich die Klemme in der nicht klemmenden Stellung befindet, und mit einer Oberseite, und ein Befestigungselement (24b) umfasst, mit einem Kopf zum funktionswirksamen In-Anlage-Kommen an der Oberseite des Nockens, und mit einem Schaft, der sich von dem Kopf hinweg und durch die mittige Öffnung des Nockens (24) hindurch erstreckt, wobei vorzugsweise die Klemme (22) und der Befestigungsring (20) derart konfiguriert sind, dass ein Kontakt zwischen dem konischen Profil des Nockens (24) und der Klemme (22) und dem Befestigungsring (20) an einer Fläche an dem Befestigungsring (20) und einer Fläche an der Klemme (22) derart erfolgt, dass die Klemme (22) aus der nicht klemmenden Stellung in die klemmende Stellung bewegt werden kann.

11. Klemmbaugruppe (18) nach einem der vorhergehenden Ansprüche, wobei der erste Bereich (32) elastisch verformbar ist und mindestens eine Ausnehmung (38) des ersten Bereichs aufweist, sowie mindestens einen Klemmabschnitt, der in Umfangsrichtung von der mindestens einen Ausnehmung des ersten Bereichs beabstandet ist, und wobei der mindestens eine Klemmabschnitt und die Klemme (22) derart ausgebildet sind, dass sie auf einen Zylinder eine im Wesentlichen gleichmäßige Spannkraft um diesen herum ausüben, wenn sich die Klemme (22) in der klemmenden Stellung befindet, und/oder
wobei der zweite Bereich (42) mindestens eine Ausnehmung (49) des zweiten Bereichs aufweist, die in Umfangsrichtung beabstandet auf beiden Seiten der zweiten radial nach innen gerichteten Oberfläche (46) angeordnet ist.

12. Befestigungsring (20, 120, 220, 320, 420), umfassend:
einen Außenumfang (26),
eine Oberseite (28),
eine Unterseite (30),
einen kreisförmigen Bereich (32) mit einer ersten Durchgangsöffnung (34), die durch eine erste radial nach innen gerichtete Fläche (36) in einem ersten Radius (R1) von einer sich durch die erste Durchgangsöffnung (34) erstreckenden ersten Längsachse gebildet ist,
einen bogenförmigen Bereich (42) mit einer zweiten Durchgangsöffnung (44), die durch eine zweite radial nach innen gerichtete Fläche (46) in einem zweiten Radius (R2) von einer sich durch die zweite Durchgangsöffnung (44) erstreckenden zweiten Längsachse gebildet ist,
**dadurch gekennzeichnet, dass** der bogenförmige Bereich (42) außerdem eine Befestigungsring-Senkung (48) in der Oberseite und koaxial zu der zweiten Durchgangsöffnung (44) aufweist, sowie durch
einen geraden Bereich (50) mit einer dritten Durchgangsöffnung (52), die durch seitlich nach innen gerichtete Wandungen (54) gebildet ist, die sich entlang einer Querachse zwischen der ersten Längsachse und der zweiten Längsachse erstrecken.

13. Befestigungsring (20, 120, 220, 320, 420) nach Anspruch 12, wobei eines, mehrere oder sämtliche der folgenden Merkmale zutreffen:
der Außenumfang (26) ist in Umfangsrichtung durchgehend ausgebildet,
der kreisförmige Bereich (32) weist Ausnehmungsabschnitte (38, 39) und Kontaktabschnitte auf, die in Umfangsrichtung beabstandet um die erste radial nach innen gerichtete Fläche angeordnet sind,
der bogenförmige Bereich (42) weist mindestens einen Ausnehmungsabschnitt (49) auf, der in Umfangsrichtung beabstandet zu beiden Seiten der zweiten Durchgangsöffnung (44) angeordnet ist, und/oder
der erste Radius (R1) ist größer als der zweite Radius (R2).

14. Klemme (22), umfassend:
eine radiale Innenseite (68) in einem ersten Radius von einer ersten Längsachse,
eine radiale Außenseite (70) in einem zweiten Radius von einer zweiten Längsachse,
eine Oberseite,
eine Unterseite,
**dadurch gekennzeichnet, dass**
eine erste längsseitige Außenseite sich zwischen der Oberseite und der Unterseite erstreckt und ein erstes Führungselement aufweist,
eine zweite längsseitige Außenseite sich zwischen der Oberseite und der Unterseite erstreckt und ein zweites Führungselement aufweist und
eine Senkung in der Oberseite ausgebildet ist und sich zwischen der Oberseite und der radialen Außenseite erstreckt.

15. Klemme (22) nach Anspruch 14, wobei das erste und das zweite Führungselement (66, 67) der ersten und der zweiten längsseitigen Außenseite Nuten/Schlitze umfassen, und/oder ferner mit einer oder mehreren Ausnehmungen, die in Umfangsrichtung beabstandet auf beiden Seiten der radialen Außenseite angeordnet sind.

16. Klemmbaugruppe (18, 118, 318, 418) nach Anspruch 1, wobei der Nocken (24), um an der Klemme (22) in Anlage zu kommen und diese zu betätigen, entlang der zweiten Längsachse bewegt wird.

## Revendications

1. Ensemble de serrage (18, 118, 318, 418), comprenant:
une bague de fixation (20, 120, 220, 320, 420) comprenant
un périmètre extérieur,
un premier passage (34) s'étendant selon un premier axe longitudinal,
un deuxième passage (44) s'étendant selon un deuxième axe longitudinal, espacé transversalement du premier passage (34), et
un troisième passage (52) s'étendant selon un axe transversal entre les premier et deuxième axes longitudinaux;
une pince (22) configurée pour être mobile par rapport à la bague de fixation le long du troisième passage (52) de la bague de fixation (20, 120, 220, 320, 420); et
une came (24) configurée pour venir en appui contre la pince (22) et actionner celle-ci le long du troisième passage (52).

2. Ensemble de serrage (18, 118, 318, 418) selon la revendication 1, dans lequel le périmètre extérieur de la bague de fixation (20, 120, 220, 320, 420) est ovale et continu circonférentiellement.

3. Ensemble de serrage (18, 118, 318, 418) selon l'une quelconque des revendications précédentes, dans lequel le premier passage (34) présente un premier rayon d'ouverture (R1) et le deuxième passage (44) présente un deuxième rayon d'ouverture (R2), le premier rayon d'ouverture (R1) étant supérieur au deuxième rayon d'ouverture (R2).

4. Ensemble de serrage (18, 118, 318, 418) selon l'une quelconque des revendications précédentes, dans lequel le troisième passage (52) comprend un guidage de pince (56) qui est parallèle à l'axe transversal et comprend deux surfaces dirigées latéralement, qui supportent et guident la pince (22) le long de l'axe transversal.

5. Ensemble de serrage (18, 118, 318, 418) selon l'une quelconque des revendications précédentes, dans lequel la came (24) comprend une rondelle conique (24a, 24b) présentant un passage central, et un élément de fixation comprenant une tige (25c) s'étendant à travers le passage central, et une tête (25b) destinée à venir en appui de manière opérationnelle contre la came (24), et/ou dans lequel la came (24) présente un profil conique de sorte que le contact entre le profil conique et la bague de fixation (20, 120, 220, 320, 420) et la pince (22) déplace la pince (22) le long de l'axe transversal.

6. Ensemble de serrage (318) selon la revendication 4,
dans lequel une bague de fixation comprend en outre:
un périmètre extérieur ovale,
une surface supérieure,
une surface inférieure,
une première partie comprenant le premier passage (34) défini par une première surface dirigée radialement vers l'intérieur à un premier rayon d'un premier axe longitudinal s'étendant à travers le premier passage, et présentant un ou plusieurs évidements de la première partie dans la première surface dirigée radialement vers l'intérieur, qui sont espacés circonférentiellement autour de la première surface dirigée radialement vers l'intérieur,
une deuxième partie comprenant le deuxième passage (44) défini par une deuxième surface dirigée radialement vers l'intérieur à un deuxième rayon d'un deuxième axe longitudinal s'étendant à travers le deuxième passage et étant espacé transversalement du premier axe longitudinal de la première partie, et présentant un contre-alésage de la bague de fixation dans la surface supérieure et coaxial au deuxième passage, ainsi qu'un ou plusieurs évidements de la deuxième partie, qui sont espacés circonférentiellement de part et d'autre du contre-alésage de la bague de fixation, et
une troisième partie comprenant le troisième passage (52) défini par des parois latérales dirigées vers l'intérieur et s'étendant selon un axe transversal entre le premier axe longitudinal et le deuxième axe longitudinal et comprenant un guidage de pince (56) formé par des parois latérales dirigées vers l'intérieur, et comprenant des saillies (380) s'étendant latéralement vers l'intérieur depuis les parois latérales dirigées vers l'intérieur,
dans lequel la pince (322) est portée par le guidage de pince (56) de la troisième partie de la bague de fixation (320), mobile le long de l'axe transversal entre une position non serrée, relativement vers la deuxième partie, et une position serrée, relativement vers la première partie, et comprend une surface de serrage dirigée radialement vers l'intérieur correspondant à la première surface dirigée radialement vers l'intérieur, ainsi qu'un contre-alésage de came correspondant au contre-alésage de la bague de fixation,
dans lequel la came est destinée à actionner la pince et comprend
une rondelle conique (24a, 24b) présentant une ouverture centrale, un profil conique ayant un diamètre supérieur à une distance entre le contre-alésage (48) de la bague de fixation et le contre-alésage de came lorsque la pince se trouve dans la position non serrée, ainsi qu'une surface supérieure, et
un élément de fixation à tête de clé à douille comprenant une tête destinée à venir en appui fonctionnel contre la surface supérieure de la rondelle conique (24a, 24b), et une tige (25c) s'étendant à partir de la tête et à travers l'ouverture central de la rondelle conique (24a, 24b).

7. Ensemble de serrage (418) selon la revendication 4, dans lequel
la pince (422) est mobile par rapport à la bague de fixation (420) selon un guidage de came du troisième passage de la bague de fixation, et
la bague de fixation (420) comprend une saillie (480) croisant le troisième passage (452) le long du guidage de came (456) pour retenir la pince (422) dans le troisième passage (452) de la bague de fixation (420).

8. Ensemble de serrage (418) selon la revendication 7, dans lequel un, plusieurs ou tous les caractéristiques suivantes s'appliquent:
la saillie (480) est formée après l'installation de la pince (422),
la saillie (480) est formée par déplacement de matériau de la bague de fixation (420) par bosselage, rivetage ou matage,
la saillie (480) vient en appui contre une surface latérale de la pince (422) qui est en contact avec le troisième passage (452) de la bague de fixation (420),
la saillie (480) empêche que la pince (422) soit déplacée au-delà d'une position serrée,
la saillie (480) présente une rampe d'entrée présentant un angle faible inférieur à 10 degrés,
la saillie (480) est préformée avant l'assemblage de la pince (422) à la bague de fixation (420), et la bague de fixation (420) est compressible suivant l'axe transversal de manière à provoquer l'élargissement du troisième passage (452) et du guidage de came (456) afin de permettre l'insertion de la pince (422) au-delà de la saillie (480) et dans le troisième passage, et/ou
la rampe d'entrée est disposée sur une surface latérale du troisième passage (452) de la bague de fixation (420) de manière à venir en appui sur la pince (422).

9. Ensemble de serrage (18, 118, 318, 418) selon la revendication 4, dans lequel:
la bague de fixation (20, 120, 220, 320, 420) comprend en outre:
une surface supérieure (28),
une surface inférieure (30), et
une première partie (32) comprenant le premier passage (34) défini par une première surface (36) dirigée radialement vers l'intérieur à un premier rayon (R1) du premier axe longitudinal s'étendant à travers le premier passage (34),
une deuxième partie (42) comprenant
le deuxième passage (44) défini par une deuxième surface (46) dirigée radialement vers l'intérieur à un deuxième rayon (R2) du deuxième axe longitudinal s'étendant à travers le deuxième passage (44) et espacé transversalement du premier axe longitudinal de la première partie (32), et
un contre-alésage (48) de la bague de fixation dans la surface supérieure (28) et coaxial au deuxième passage (44), et
une troisième partie (50) comprenant le troisième passage (52) défini par des parois latérales (54) dirigées vers l'intérieur et s'étendant selon l'axe transversal entre le premier axe longitudinal et le deuxième axe longitudinal,
la pince (22) étant portée de manière mobile dans le troisième passage (52) de la troisième partie (50) de la bague de fixation (20), mobile le long de l'axe transversal entre une position non serrée relativement vers la deuxième partie (42), et une position serrée relativement vers la première partie (32), et comprenant une surface de serrage dirigée radialement vers l'intérieur correspondant à la première surface (36) dirigée radialement vers l'intérieur, ainsi qu'un contre-alésage de came correspondant au contre-alésage (48) de la bague de fixation; et
la came (24) pouvant être amenée en appui contre la pince (22) afin de déplacer la pince (22) le long du troisième passage (52) en direction de la première partie (32) de la bague de fixation (20).

10. Ensemble de serrage (18) selon la revendication 9, dans lequel la came (24) comprend une rondelle conique (24a) présentant une ouverture centrale, un profil conique ayant un diamètre supérieur à une distance entre le contre-alésage (48) de la bague de fixation et le contre-alésage de came lorsque la pince (22) se trouve dans la position non serrée, ainsi qu'une surface supérieure de came, et un élément de fixation (24b) comprenant une tête pour venir en appui de manière fonctionnel contre la surface supérieure de came, et une tige s'étendant à partir de la tête et à travers l'ouverture central de la came (24), de préférence la pince (22) et la bague de fixation (20) étant configurées de telle sorte que le contact entre le profil conique de la came (24) et la pince (22) ainsi que la bague de fixation (20) s'effectue au niveau d'une zone de la bague de fixation (20) et une zone de la pince (22), de manière à permettre le déplacement de la pince (22) de la position non serrée vers la position serrée.

11. Ensemble de serrage (18) selon l'une quelconque des revendications précédentes, dans lequel la première partie (32) est élastiquement déformable et comprend au moins un évidement (38) de première partie et au moins une section de serrage espacée circonférentiellement dudit au moins un évidement de première partie, et dans lequel ladite au moins une section de serrage et la pince (22) sont configurées pour exercer une tension sensiblement uniforme autour d'un cylindre lorsque la pince (22) se trouve dans la position serrée, et/ou
dans lequel la deuxième partie (42) comprend au moins un évidement (49) de deuxième partie disposé circonférentiellement de chaque côté de la deuxième surface (46) dirigée radialement vers l'intérieur.

12. Bague de fixation (20, 120, 220, 320, 420), comprenant:
un périmètre extérieur (26),
une surface supérieure (28),
une surface inférieure (30),
une partie circulaire (32) comprenant un premier passage (34) défini par une première surface dirigée radialement vers l'intérieur (36) à un premier rayon (R1) d'un premier axe longitudinal s'étendant à travers le premier passage (34),
une partie arquée (42) comprenant un deuxième passage (44) défini par une deuxième surface dirigée radialement vers l'intérieur (46) à un deuxième rayon (R2) d'un deuxième axe longitudinal s'étendant à travers le deuxième passage (44),
**caractérisée en ce que** la partie arquée (42) comprend en outre un contre-alésage (48) de la bague de fixation dans la surface supérieure et coaxial avec le deuxième passage (44), et par
une partie droite (50) comprenant un troisième passage (52) défini par des parois latérales dirigées vers l'intérieur (54) s'étendant selon un axe transversal entre le premier axe longitudinal et le deuxième axe longitudinal.

13. Bague de fixation (20, 120, 220, 320, 420) selon la revendication 12, dans laquelle un, plusieurs ou tous les caractéristiques suivantes s'appliquent:
le périmètre extérieur (26) est continu circonférentiellement,
la partie circulaire (32) comprend des zones d'évidements (38, 39) et des zones de contact espacées circonférentiellement autour de la première surface dirigée radialement vers l'intérieur,
la partie arquée (42) comprend au moins une zone d'évidement (49) espacée circonférentiellement de chaque côté du deuxième passage (44), et/ou
le premier rayon (R1) est supérieur au deuxième rayon (R2).

14. Pince (22), comprenant:
une extrémité radiale interne (68) à un premier rayon d'un premier axe longitudinal,
une extrémité radiale externe (70) à un deuxième rayon d'un deuxième axe longitudinal,
une surface supérieure,
une surface inférieure,
**caractérisée en ce que**
un premier côté latéral externe s'étend entre la surface supérieure et la surface inférieure et comprend un premier élément de guidage,
un deuxième côté latéral externe s'étend entre la surface supérieure et la surface inférieure et comprend un deuxième élément de guidage, et
un contre-alésage est formé dans la surface supérieure et s'étend entre la surface supérieure et l'extrémité radiale externe.

15. Pince (22) selon la revendication 14, dans laquelle le premier et le deuxième élément de guidage (66, 67) des premier et deuxième côtés latéraux externes comprennent des rainures/fentes, et/ou comprenant en outre un ou plusieurs dégagements espacés circonférentiellement de part et d'autre de l'extrémité radiale externe.

16. Ensemble de serrage (18, 118, 318, 418) selon la revendication 1, dans lequel la came (24), afin de venir en appui contre la pince (22) et d'actionner celle-ci, se déplace le long du deuxième axe longitudinal.
